# EUROPEAN PATENT APPLICATION

(11) **EP 2 465 659 A1**
(43) Date of publication of application: **20.06.2012**
(21) Application number: 10195989.8
(22) Date of filing: 20.12.2010
(51) Int. Cl.: B29C 45/26, B29C 45/34, B29L 17/00

(54) **Die stamper assembly, injection compression moulding apparatus and method of manufacturing optical data carriers**

(71) Applicant: Axxicon Moulds Eindhoven B.V., 5692 HN Son (NL); Singulus Technologies AG, 63796 Kahl am Main (DE)
(72) Inventor: Verhoeven, Hendricus Johannes, 5738 BC Mariahout (NL); van Asseldonk, Wilhelmus Gerardus, 5348 EH (NL); Knips, Peter, 63755 Alzenau (DE)
(74) Representative: van Westenbrugge, Andries

(57) **Abstract**

The invention relates to a die stamper assembly (1) provided with a first die part (2) for holding a first stamper (5), a second die part (3) for mounting a second stamper (6), the first die part cooperating with the second die part to define a mould cavity (4) between the first and second die parts. The first stamper is mounted at a boundary of the first die part and the second stamper is mounted at a boundary of the second die part. Furthermore, the die stamper assembly comprises a venting ring (7) configured around and moveable with respect to the first die part and defining an outer boundary of the mould cavity. The die stamper assembly further comprises a venting holder (71) arranged for holding the circumference of the first stamper and positioned between the first die part and the venting ring to attach the first stamper on the first die part to allow venting of air escaping from the mould cavity and to prevent leaking of plastic material out of the mould cavity.

## Description

### Field of the invention

The present invention is directed towards a die stamper assembly, an injection compression moulding apparatus and a method for manufacturing an optical data carrier.

### Background of the invention

A die stamper assembly is used in an injection compression moulding apparatus for manufacturing of optical data carriers, for example a Digital Versatile Disc (DVD) optical disc, a Blu Ray (BD) optical disc, a combo DVD/BD optical disc or a multi-layer BD optical disc.

The combo DVD/BD disc is a multi-layer optical disc according to the BD59 standard and can be played on a DVD players or a BD player. The combo DVD/BD disc comprises a first disc part and a second disc part. The first part is provided with a first layer with BD data on a first side of the first disc part and a second layer of DVD data on a second side of the first disc part, a third layer of BD data stacked on the first layer of BD data, and the second disc part is provided with a fourth layer of DVD data on a third side facing the DVD data on the second side of the first disc part. A injection compression moulding process provides the respective first and second side of the first disc part with the respective DVD and BD data using the injection compression moulding apparatus. The second layer of BD is stacked on the first layer of BD data by a conventional embossing process comprising coating of the first layer of BD data with a first photo initiated resin, embossing the BD data in the photo initiated resin and curing of the photo initiated resin and providing a second semi-reflective layer on the cured photo initiated resin. Furthermore, an injection compression moulding process can be used to provide the fourth layer of DVD data on the third side of the second disc part. The third side of the second disc part provided with the fourth layer of DVD data may be bonded via a bonding layer with the second side of the first disc part provided with the second layer of DVD data to obtain the combo DVD/BD disc.

The injection moulding apparatus is provided with the die stamper assembly to manufacture the first die part. The die stamper assembly is provided with a first stamper mounted to the boundary of the first die part and a second stamper mounted to the boundary of the second die part. The first and second stampers comprise respective discs of nickel (Ni) each provided with a relief comprising a spiral series of pits in order to form a corresponding series of elevations or depressions in a central data part on both sides of the first disc part representing the respective DVD and BD data.

In the die stamper assembly the first and second stampers remain attached to the first or second die parts via vacuum channels which have apertures in the boundaries of the first die part or second die part. In operation, the vacuum channels maintain a pressure difference between the locations on the side of stamper facing these apertures and the other side of the stamper. This pressure difference exerts a force on the stamper towards the first die part or second die part.

Furthermore, the die stamper assembly is provided with a venting ring around the first die part to define the outer boundary of the mould cavity. The venting ring is moveable in an axial direction relatively towards the first die part to allow moving the second die part to the first die part, when the mould cavity is reduced during the injection compression process to provide both sides of the first disc part with respective data and to reduce stress inside the plastic material that form the first disc part. During the injection compression moulding process a high pressure is generated inside the mould cavity which may cause the plastic material leak through a gap between the side of the first stamper and the venting ring, which may cause that the venting ring may not move or hardly move.

Furthermore, severe requirements are placed on the flatness and optical characteristics of the optical discs and it appears that the quality of the moulded first disc part does not always meet the specifications.

It is an object of the invention to improve the injection moulding process.

To achieve this object a first aspect of the invention provides a die-stamper assembly as claimed in claim 1.

The invention is based on the insight that by introducing the venting holder, positioned between the venting ring and the first die part, for holding the circumference of the first stamper, the gap between the first stamper and the venting ring can be reduced to zero or to a sufficient small dimension in order to prevent leakage of the plastic material during compression, while allowing venting of air escaping from the mould cavity and allowing that the venting ring is able to move more easily with respect the first die part when the second die part is moving to the first die part during compression. Hence the injection moulding process is improved.

Furthermore, in this configuration, because the venting holder can hold the first stamper on the first die part, the apertures of the vacuum channels in the data part of the first die part can be omitted. During compression the pressure in the mould cavity, which is about 600 bar, exerts a force on the first stamper. This force causes the unwanted deformations at the locations of the apertures of the vacuum channels and affects the flatness of the central data part of the stamper. The unwanted deformations are replicated to the first disc part and may contribute to a lower quality of the optical discs. By omitting the apertures in the central data part of the first die part the unwanted deformations in the flatness of the central data part of the first stamper are reduced and the quality of the first disc part, the optical disc and the injection moulding process is improved.

The apertures of the vacuum channels for holding the second stamper can be located in the second die part outside an area opposite the central data part of the second side of the first disc part , so that these apertures does not affect the quality of the first disc part.

A further advantage of the presence of the venting holder is that the edges of the formed first disc part have a more regular shape which also improves the quality of the optical disc and the injection moulding process.

An embodiment of the die-stamper assembly comprises a resilient member arranged between the venting ring and the venting holder for holding the venting holder against the first die part. In this arrangement the venting holder is pressed by the venting ring via the resilient member on the first die part, thereby holding the first stamper on the first die part while the venting ring can be moved in an axial direction. In a further embodiment of the die stamper assembly the resilient member comprises a ring of a resilient material. The ring can be placed directly between the venting ring and venting holder. The ring can have a circular, rectangular or quad-lobbed cross-section. The resilient material may comprise, for example, silicone rubber, rubber, methyl-butadiene or polychloropeen.

In a further embodiment the resilient member comprises a plurality of springs distributed around the circumference of the venting holder. The springs can be positioned by spring chambers along the circumference of the first die part in which chambers the springs partly fit. The number of springs is sufficiently large to ensures an evenly distribution of the forces holding the venting holder on the first die part. In practice this number may be about 20.

In a still further embodiment of the die stamper assembly the inner circumference of the venting holder is provided with a flange for holding the circumference of the first stamper. The flange attaches the first stamper against the first die part and allows for thermal expansion of the first stamper in a radial direction, a small gap between the flange and the first stamper allows for venting air escaping from the mould cavity and preventing leakage of moulding material when the moulding material is compressed.

In a still further embodiment of the die stamper assembly, the inner circumference of the venting holder is provided with a recess. The dimensions of the recess are such that in a radial direction sufficient space exists between the circumference of the first stamper and the inner side of the recess to allow thermal expansion of the first stamper due to a higher temperature of the injected material.

In a still further embodiment the venting holder comprises an angle cross-section ring.

The strength of the angle cross- section ring can be optimized by adapting the thicknesses of the respective first and second legs of the angle cross-section ring.

In a still further embodiment of the die stamper assembly the venting ring is provided with a lifting member for lifting the venting holder when the venting ring is lifted from the first die part. After a production run of a series of first disc parts the first stamper may be exchanged with a different stamper. This arrangement enables an operator to easily exchange the first stamper. When the operator removes the venting ring, the lifting member also lifts off the venting holder and enabling the first stamper to be exchanged.

In a still further embodiment of the die stamper assembly, the lifting member comprises a plurality of pins distributed along the circumference of the venting ring and extending under the venting holder. In this arrangement the pins support the venting holder and also lifts off the venting holder from the first die part, when the venting ring is lifted from the first die part. The pins may comprise bolts.

In a still further embodiment of the die stamper assembly, the first die part is provided with a ball bearing for centering and guiding the venting ring. The ball bearing enables the centering of the venting ring and the venting holder around the first die part and the stamper, when the venting ring and the venting holder are mounted on the first die part. Furthermore, the ball bearing guides the venting ring in an axial direction when the second die part is moved towards the first die part during compressing of the mould cavity.

In a still further embodiment of the die stamper assembly, the stamper assembly comprises a holder for coupling with the venting ring and for removing the venting ring.

The invention further relates to an injection-compression moulding apparatus as claimed in claim 13.

To achieve the above mentioned object a second aspect of the invention provides a method as claimed in claim 14.

Other features of the system of the present invention will become apparent from the following detailed description

### Brief description of drawing

Fig.1 shows diagrammatically a side view of an embodiment of a die stamper assembly for manufacturing optical data carriers;
Fig. 2 shows diagrammatically a cross-section of a multi layer optical disc;
Fig. 3 shows a cross section of an embodiment of the venting ring, the venting holder and the first stamper ;
Fig. 4 shows a first detail IV of a line section of a first embodiment of the venting ring, the venting holder and the first stamper;
Fig. 5 shows a second detail V of a line section of the first embodiment of the venting ring, the venting holder and the first stamper;
Fig. 6 shows a further detail of the cross section of the first embodiment of the venting ring and the venting holder and the first stamper of Fig.4;
Fig. 7 shows a top view of the first embodiment of the die stamper assembly;
Fig. 8 shows a cross section of the second embodiment of the venting ring and the venting holder;
Fig. 9 shows a top view of the second embodiment of the venting ring and the venting holder;
Fig. 10 shows a top view of the holder and the die stamper assembly;
Fig. 11 shows a first side view of the holder and the venting ring; and
Fig. 12 shows different types of cross-section of a resilient ring.

In the figures the same reference numbers indicate like parts.

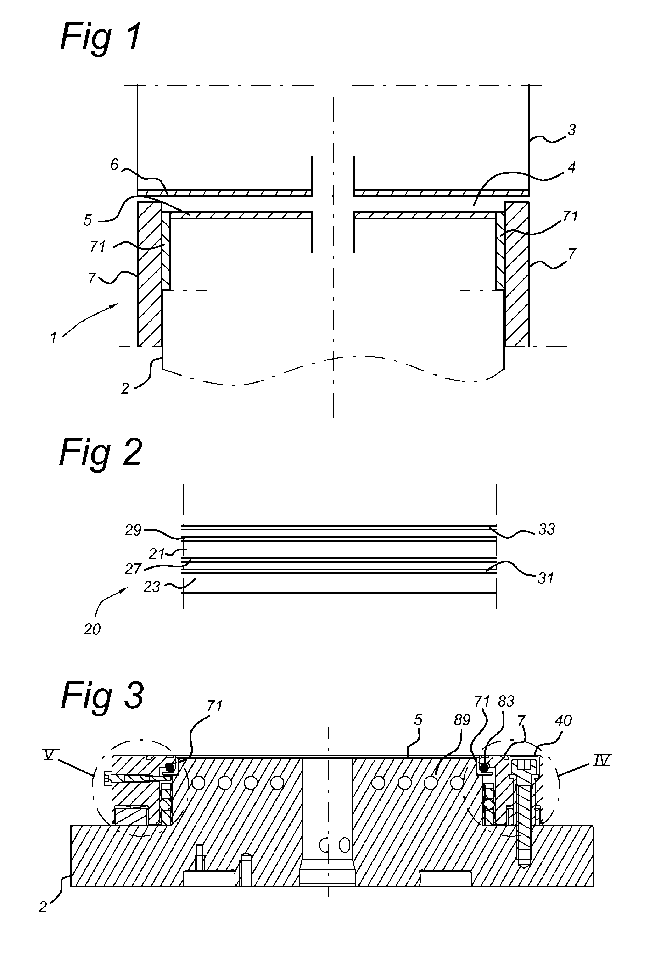

Fig. 1 shows diagrammatically a side view of an embodiment of a die stamper assembly 1 according the invention for manufacturing optical data carriers. The die stamper assembly 1 can be used in a conventional injection compression moulding apparatus. The die stamper assembly 1 is provided with a first die part 2 and a second die part 3. The first and second die parts 2, 3 cooperate together to form a cylindrical mould cavity 4 between the first and second die parts. A first stamper 5 is mounted in a boundary of the first die part 2. A second stamper 6 is mounted in a boundary of the second die part 3. The outer boundary of the mould cavity 4 is formed between the first stamper 5 the second stamper 6 and a venting ring 7. The die stamper assembly 1 further comprises a venting holder 71 which is configured and arranged for holding the circumference of the first stamper 5 and positioned between the first die part 2 and the venting ring 7. The first stamper 5 is located inside the circumference of the venting ring 7. Furthermore, the venting ring 7 may be spring loaded and partly positioned around the first stamper 5 and the first die part 2 and moveable in an axial direction with respect to the first die part 2. Furthermore, the diameter of the first stamper 5 is smaller than the diameter of the second stamper 6. Thermo plastic material can be injected in the mould cavity 4. The die stamper assembly 1 can be applied in a conventional injection compression moulding process, known to a person skilled in the art, for the manufacturing of disc parts for optical data carriers, for example, a DVD disc and BD disc, a combo DVD/BD disc according to a BD59 format or a multiple layer optical disc. For example a four-layer BD disc according to a BDXL format.
Fig. 2 shows diagrammatically a cross-section of a multi layer optical disc. An example of a multi layer optical disc is the combo DVD/BD disc. The combo DVD/BD disc 20 comprises a first disc part 21 and a second disc part 23. A first side of the first disc part 21 is provided with a first layer 27 of DVD data and a second side of the first disc part 21 is provided with a second layer 29 of BD data. The first disc part 21 can be manufactured in the injection compression process using the die stamper assembly 1 in a conventional injection compression moulding apparatus. Thereto, the first stamper 5 with DVD data is mounted on the boundary, for example, a first mirror block of the first die part 2 and the second stamper 6 with BD data is mounted on a boundary, for example, a second mirror block of the second die part 3. The first and second stampers 5,6 comprise respective discs of nickel (Ni) each provided with a relief comprising a spiral series of pits in order to form a corresponding series of elevations or depressions on the central data part of both sides of the first disc part 21 representing the respective DVD and BD data.

In the injection compression moulding process the mould cavity 4 between the first and second stampers 5,6 and the venting ring 7 is formed by extending the distance between the first and the second stampers 5,6 to a distance slightly larger than a predetermined thickness of the first disc part 21. Normally, this distance between the first and second stampers 5,6 is equal to 0.6 mm in case the predetermined thickness of the first disc part is equal to 0.5 mm. In a next step of the process, the thermo plastic material is injected in the mould cavity 4. In a next further step of the process the second stamper 6 is pressed towards the first stamper 5, whereby the venting ring 7 moves in an axial direction with respect the first die part 2. These steps are repeated until the predetermined thickness of the first disc part 21 is obtained. In this way the plastic material is homogeneously distributed inside the mould cavity 4. In a next step of the process, the thermoplastic material is cooled down and the first disc part 21 is released from the first stamper 5. As a result, the first side of the first disc part 21 is provided with the first layer 27 of DVD data and the second side of the first disc part 21 with the second layer 29 of BD data.

The third BD data layer 33 is provided on the second layer 29 in a conventional embossing process known to a person skilled in the art. This embossing process comprises subsequent steps of spin coating a photo-initiated resin, embossing the BD data in the photo-initiated resin and UV curing of the photo-initiated resin.

The second disc part 23 is also manufactured in a conventional injection moulding process, known to a person skilled in the art. That process provides a third side of the second disc part 23 with a fourth layer 31 of DVD data. In a final process step, the second disc part 23 and the first disc part 21 are centered and bonded together whereby the first layer 27 of the first disc part 21 provided with DVD data faces the fourth layer 31 of DVD data of the second disc part 23.

The thickness of the first disc part is 0.5 mm. The thickness of the second disc part is 0.6 mm. The combined thickness of intermediate layers is about 0.1 mm The total thickness of the combo DVD BD disc is 1.2 mm. The diameter of the combo DVD BD disc is 120 mm.

In a similar process a four layer BD optical disc can be manufactured in which, using Fig. 2, the first disc part 21 is provided on both sides with a first and second layer 27,29 of BD data via a conventional injection compression moulding process. The third BD data layer 33 is provided on the second layer 29 in the conventional embossing process as described above. The third side of the second disc part is provided with a fourth layer 31 of BD data in the conventional embossing process. In a final step the second disc part 23 and the first disc part 21 are centered and bonded together whereby the first layer 27 of the first disc part 21 provided with BD data faces the fourth layer 31 of BD data of the second disc part 23.

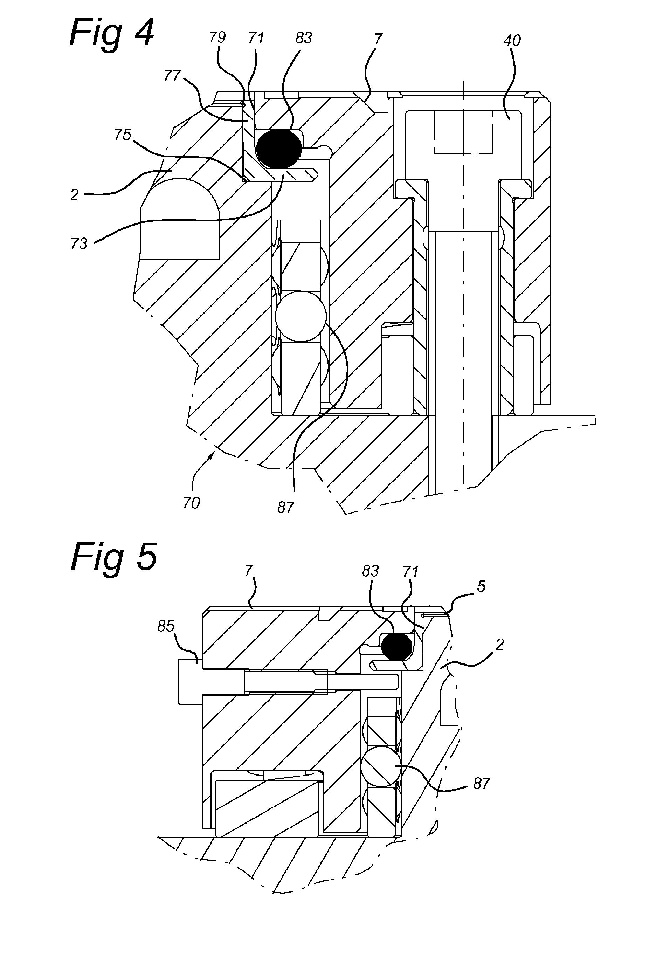

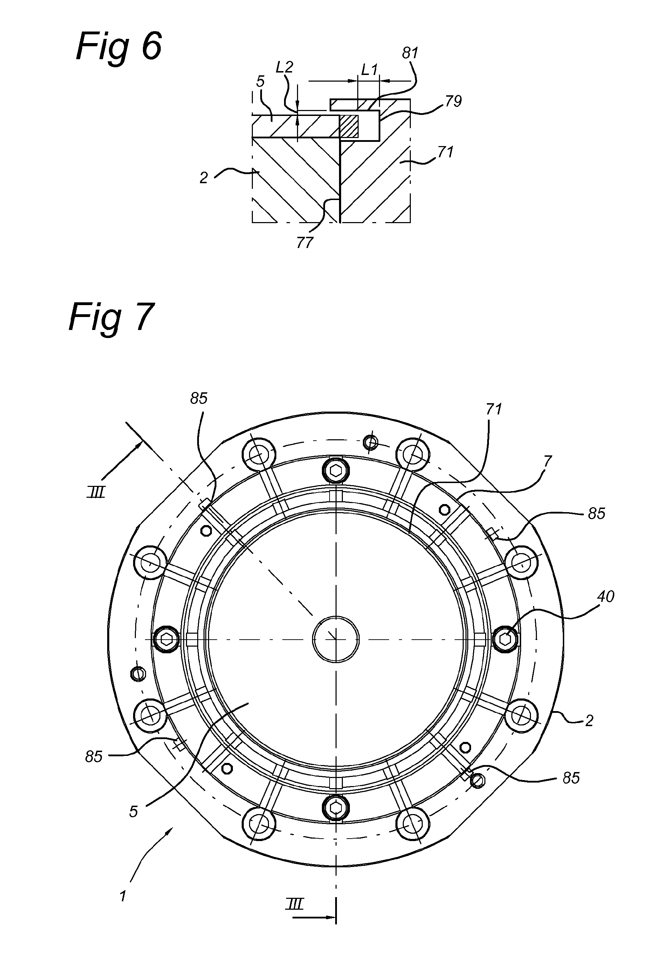

Fig. 3 shows a line section of the embodiment of the die stamper assembly according to the invention. The cross section is along the line section III-III of Fig. 7. The die stamper assembly 1 comprises the first die part 2, the venting ring 7 and the venting holder 71. The venting ring 7 presses the first stamper 5 on the first die part 2 via the venting holder 71. The venting ring 7 is coupled to the first die part 2 with bolts 40. The venting ring 7 may be spring loaded and is moveable in an axial direction with respect to the first die part 2. Furthermore, cooling channels 89 are provided in the first die part 2. Also, the die assembly comprises an O-ring 83 which will be described in relation to Fig. 4.

Fig. 4 shows a first detail IV of the cross section of a first embodiment of the venting ring 7, the venting holder 71 and the first stamper 5 of Fig. 3. According to the invention the venting ring 7 is provided with the venting holder 71 for holding the circumferential side of the first stamper 5. The venting holder 71 comprises an angle cross section ring. A first leg 73 of the venting holder 71 is resting on a first flange 75 of the first die part 2. The inner side of a second leg 77 is provided with a recess 79 which allows thermal expansion of the first stamper 5. The thickness of the respective first leg 73 and the second leg 77 can be adapted to obtain a sufficient strength of the venting holder 71. Furthermore, the venting holder 71 defines a precise boundary of the first stamper 5 near an end of the pit spiral.

The venting holder 71 can be machined from a stainless steel mold steel which is manufactured via a powder metallurgy like processing technique. For example Elmax®, as can be obtained from Böhler Uddeholm.

Fig. 6 shows a further detail of the cross-section of the first embodiment of the venting holder 71, the first stamper 5 and the recess 79 of Fig. 4. The inner side of the second leg 77 of the venting holder 71 may further provided with a second flange 81 for maintaining the first stamper 5 on the first die part 2. The radial distance L1 between the bottom wall of the recess 79 and the circumference of the first stamper 5 is about 0.1 mm to provide sufficient space for thermal expansion of the first master due to temperature change during the moulding process. In Fig. 6 the first type of hatching indicates the outline of the first stamper 5 in an unexpended state, the second type of hatching indicates the outline of the first stamper 5 in an expanded state. The axial distance L2 between the upper side of the first stamper 5 and the second flange 81 may vary between 0 and 10 µm to provide a gap for venting air escaped from the mould cavity, but preventing leakage of the moulding material through this gap out of the mould cavity 4. Because the pressing action of the venting holder 71 on the first stamper 5 to maintain the first stamper on the first die part 2 vacuum channels in the central data part of the first die part can be omitted and the forces on the first stamper 5 due the compression are uniformly distributed and reduce unwanted deformations in the first stamper 5.

In the embodiment shown in Fig. 4, the venting ring 7 presses the venting holder 71 to the first die part 2 via a resilient member, for example, a ring 83 of a resilient material like rubber, silicone rubber, isomethylbutadiene or polychloorpropeen. In an embodiment the resilient ring may be an O-ring. Also a resilient ring with different cross-sections can be used. The resilient ring may also comprise a central chamber filled with a gas, for example nitrogen.

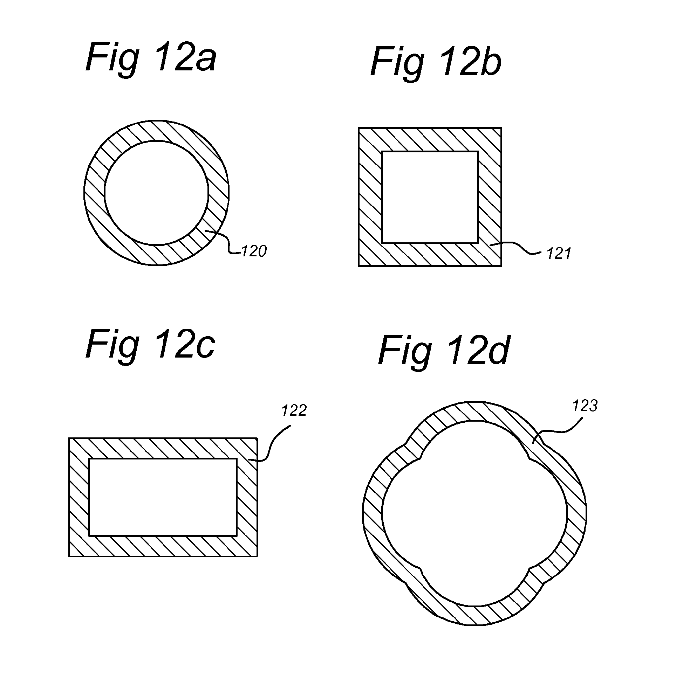

Fig 12 shows different types of cross-sections of the ring 83. Fig. 12a shows a circular cross-section 120. Fig 12b shows a square cross-section 121. Fig. 12c shows a rectangular cross-section 122 and Fig. 12d shows a quad-lobbed cross-section 123. The O-ring 83 enables a small relative movement in an axial direction between the venting holder 71 and the venting ring 7 when the mould cavity 4 between the first stamper 5 and the second stamper 6 is compressed during subsequent steps of the injection compression moulding process while the venting holder 71 is still holding the first stamper 5 pressed to the first die part 2. Furthermore, the venting ring 7 is provided with bolts 40 which may set the O-ring 83 under a pre-tension, so the O-ring is in a compressed state independent of the state of the mould cavity 4.

Fig. 5 shows a second detail V of a cross-section of the first embodiment of die stamper assembly of Fig. 3. In this embodiment the venting ring 7 is provided with a plurality of pins, for example four lifting bolts 85, extending radially towards underneath the venting holder 71 for lifting off the venting holder 71 when the venting ring 7 is removed, for example, for exchanging the first stamper 5.

Furthermore, in the embodiment shown in Fig. 4 and Fig. 5 the first die part 2 comprises a ball bearing 87 for centering the venting ring 7 around the first die part 2 and for guiding a movement in an axial direction of the venting ring 7 relative to the first die part 2 when the mould cavity 4 between the first and second die parts 2,3 is compressed.

Fig. 7 shows a top view of the die stamper assembly 1 comprising the first die part 2, the first stamper 5, the venting ring 7, the venting holder 71 and the lifting bolts 85.

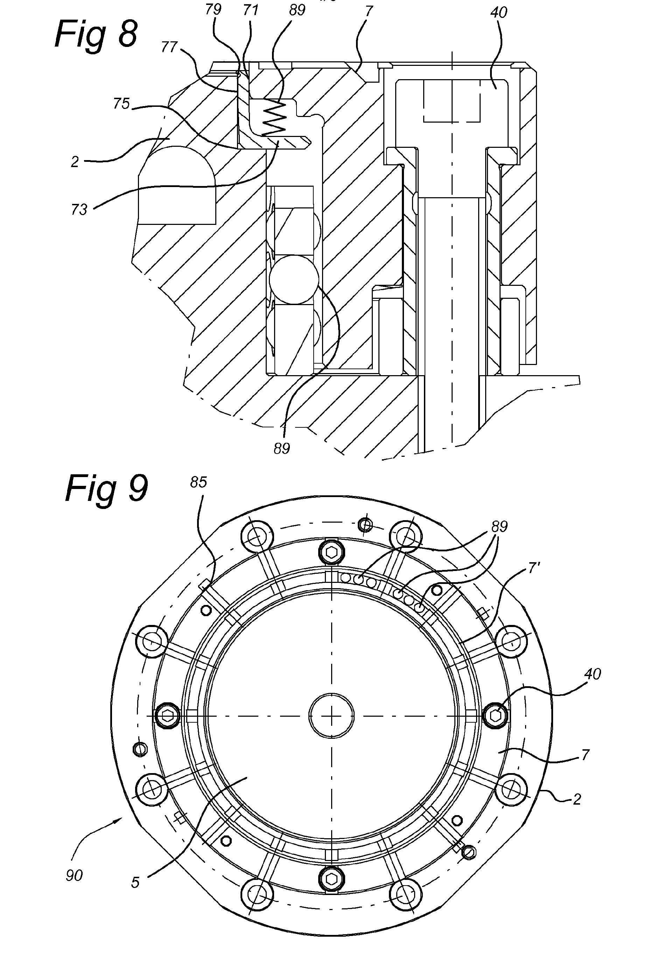

Fig. 8 show a cross-section of a second embodiment of the die stamper assembly wherein the resilient member is formed by a plurality, for example 20, metal helical springs 89 that are evenly distributed around the venting holder 7. The metal helical springs 89 are positioned between the venting ring 7 and the first leg 73 of the venting holder 71. The venting ring 7 and/or the venting holder 71 may provided with an equal number of spring chambers for partly holding the metal helical springs 89.

Fig. 9 shows a top view of the second embodiment of the die stamper 90, the venting ring 7, venting holder 71, the spring chambers 89 and the lifting bolts 85.

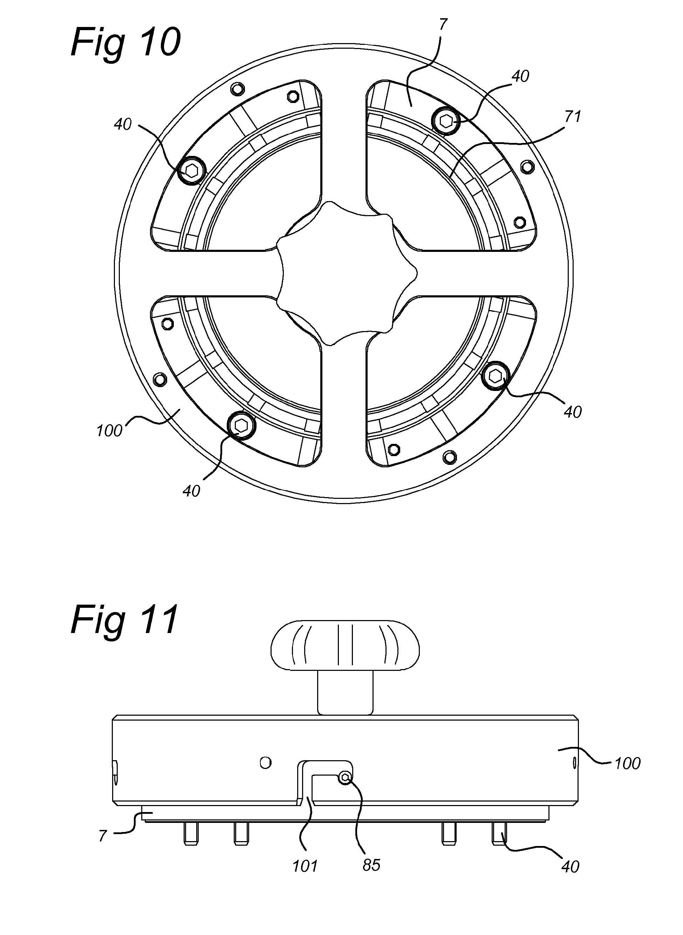

Fig. 10 shows a top view of a holder 100 and the venting ring 7.

Fig. 11 shows a side view of the holder 100 with provided with the bayonet catches 101, the venting ring 7, the bolts 40 and the lifting pins 85.
The holder 100 can be used for assembling and disassembling the venting ring 7 and the venting holder 71 from the first die part 2. The holder 100 is provided with bayonet catches 101 that cooperate with heads of the lifting bolts 85 of the venting ring 7.

For disassembling the die stamper assembly 1, and to remove the venting ring 7 and the venting holder 71 from the first die part 2, the first die part 2 is cooled down to about 90°. This is 10° C below the standard operation temperature, which is about 100° C. When the lower temperature is reached, the operator can remove the venting ring 7 and the venting holder 71 from the first die part 2 for exchanging the first stamper 5 with a different stamper. Thereto an operator removes the bolts 40 and couples the bayonet catches 101 of holder 100 with the corresponding lifting bolts 85 of the venting ring 7. When the holder 100 is coupled with the venting ring 7, the operator lifts off the venting ring 7 together with the venting holder 71 from the first die part 2 and removes the first stamper 5.

For assembling the die stamper assembly the first die part 2 and the first stamper 5 are cooled down to 90°C. This is 10°C below the standard operating temperature of 100° C. The venting ring 7 and the venting holder 71 are separately heated to a temperature of about 150° C. When the respective parts have the desired temperatures, the operator assembles the venting ring 7 and the venting holder 71 with the first die part 2 and the first stamper 5 using the holder 100, and subsequently removes the holder 100 from the venting ring 7 by releasing the bayonet catches 101 from the lifting bolds 85.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. A die stamper assembly (1) provided with a first die part (2) for mounting a first stamper (5), a second die part (3) for mounting a second stamper (6), the first die part cooperating with the second die part to define a mould cavity (4) between the first and second die parts, and
a venting ring (7) configured around and moveable with respect to the first die part (2) and defining an outer boundary of the mould cavity (4), wherein
the die stamper assembly further comprises a venting holder (71) arranged for holding the circumference of the first stamper (5) and positioned between the first die part (2) and the venting ring (7).

2. Die stamper assembly according to claim 1 wherein the die stamper assembly comprises a resilient member (83) arranged between the venting ring (7) and the venting holder (71) for holding the venting holder (7) against the first die part (2).

3. Die stamper assembly according to claim 2 wherein the resilient member (83) comprises a ring of a resilient material.

4. Die stamper assembly according to claim 3 wherein the resilient material is one of the group silicone rubber, rubber, methyl-butadiene or polychloropreen.

5. Die stamper assembly according to claim 2 wherein the resilient member (83) comprises a plurality of springs (89) distributed around the circumference of the venting holder (71).

6. Die stamper assembly according to any one of the preceding claims wherein the inner circumference of the venting holder (71) is provided with a flange (81) for holding the circumference of the first stamper (5).

7. Die stamper assembly according to any one of the preceding claims wherein the inner circumference of the venting holder (71) is provided with a recess (79).

8. Die stamper assembly according to any one of the preceding claims wherein the venting holder (71) comprises an angle cross-section ring (73,77).

9. Die stamper assembly according to any one of the preceding claims wherein the venting ring is provided with a lifting member (85) for lifting the venting holder (71) when the venting ring (7) is removed from the first die part (2).

10. Die stamper assembly according to claim 9 wherein the lifting member comprises a plurality of pins (85) distributed along the circumference of the venting ring (7) and extending under the venting holder (71).

11. Die stamper assembly according to any one of the preceding claims wherein the first die part is provided with a ball bearing (87) for centering and guiding the venting ring (7).

12. Die stamper assembly according to any one of the preceding claims wherein the die stamper assembly comprises a holder (100) for coupling with the venting ring (7) and for removing the venting ring.

13. Injection compression moulding apparatus comprising a die stamper (1) assembly as claimed in any of the preceding claims.

14. Method of manufacturing an optical data carrier comprising the provision of a first disc part (21) with two sides provided with data facing outwards, wherein the provision of the first disc part involves injection compression moulding, **characterized in that** the die stamper assembly (1) according to claim 1 is used for injection compression moulding the first disc part (21).
